# EUROPEAN PATENT SPECIFICATION

(11) **EP 2 002 919 B1**
(45) Date of publication and mention of the grant of the patent: **30.03.2016**
(21) Application number: 08251421.7
(22) Date of filing: 14.04.2008
(51) Int. Cl.: B23K 20/00, B23K 33/00, F01D 5/18, B23K 101/00, B23K 103/10, B23K 101/04

(54) **Method of forming hollow structures**
Verfahren zum Herstellen von Hallow-Strukturen
Procédé de formation de structures creuses

(30) Priority: 15.06.2007 US 818931
(43) Date of publication of application: 17.12.2008
(73) Proprietor: United Technologies Corporation, Hartford, CT 06101 (US); The Curators of the University of Missouri, Rolla, MO 65409 (US)
(72) Inventor: Watson, Thomas J., South Windsor CT 06074 (US); Mishra, Rajiv S., MO 65401 (US)
(74) Representative: Hall, Matthew Benjamin

(56) References cited:
- EP-A1- 0 349 065
- EP-A1- 1 386 688
- US-A1- 2002 095 903

## Description

The present invention relates to a method of forming hollow structures.

Hollow structures are used in a variety of applications in aviation and aerospace industries. For example, hollow airfoils are beneficial in reducing weight and for increasing heat transfer rates during operation. Such structures are typically formed from welded metal parts, where the metal parts are offset from each other with multiple rib extensions and comer walls to strengthen the overall hollow structures. The offsetting of the metal parts accordingly forms hollow regions between each rib extension, and between rib extensions and the corner walls. As such, it is desirable to reduce the sizes of the rib extensions and the corner walls to increase the volumes of the hollow regions. This reduces the weight of the hollow structures.

However, during welding operations such as friction stir welding, the metal parts are typically welded together at the rib extensions and at the corner walls to secure the metal parts together. As a result, the rib extensions and corner walls are subject to high stress loads during the welding operations. Decreasing the sizes of the rib extensions and the corner walls accordingly increases the risk of buckling or fracturing the rib extensions and the corner walls during the welding operations. As such, there is a need for hollow structures that provide high-volume hollow regions and have high strengths to withstand the stress loads applied during welding operations.

US 2002/0095903 which discloses the preamble of claim 1, discloses a hollow frame member which is constituted by two face plates joined in a truss shape by ribs. The face plates are joined by friction stir welding.

The present invention provides a method according to claim 1 of forming a hollow structure, the method comprising: positioning a first metal part adjacent to a tapered support member of a second metal part to form an intersection, wherein the tapered support member extends from a plate of the second metal part and is configured to transfer at least a portion of an applied stress load from the tapered support member to the plate; friction stir welding the first metal part and the tapered support member to form a welded joint at the intersection, wherein the friction stir welding applies a stress load to the tapered support member, characterised in that the tapered support member at least partially defines a mechanical locking mechanism at the intersection, and in that the first metal part and the second metal part are each derived from at least one Al-RE-TM alloy.

The hollow structure formed by the method includes first and second metal parts having interior surfaces, and a tapered support member (e.g., tapered airfoil ribs and corner walls) extending from the interior surface of the second metal part. The hollow structure also includes a friction stir welded joint that extends through the first metal part and into the tapered support member, where the interior surfaces, and the tapered support member at least partially define a hollow region of the hollow structure.

Certain preferred embodiments will now be described, by way of example only, with reference to the accompanying drawings, in which:
FIGS. 1A-1D are side views of a hollow structure, which is a central portion of a hollow airfoil, being formed with the use of a friction stir welding system;
FIGS. 2A and 2B are side views of a first alternative hollow structure being formed with the use of a friction stir welding system, which shows a tapered rib extension having sloped slides extending from each end;
FIGS. 3A and 3B are side views of a second alternative hollow structure being formed with the use of a friction stir welding system, which shows a tapered rib extension having sloped sides extending from each end and a centrally-located intersection;
FIGS. 4A and 4B are side views of a third alternative hollow structure being formed with the use of a friction stir welding system, according to claim 1, which shows a tapered rib extension having sloped sides extending from each end and a centrally-located, notch-shaped intersection;
FIGS. 5A and 5B are side views of a fourth alternative hollow structure being formed with the use of a friction stir welding system, which shows a tapered rib extension having gradual sloped sides extending from each end;
FIGS. 6A and 6B are side views of a fifth alternative hollow structure being formed with the use of a friction stir welding system, which shows a tapered rib extension having gradual sloped sides extending from each end and a centrally-located, notch-shaped intersection; and
FIGS. 7A and 7B are side views of a sixth alternative hollow structure, which is a corner edge of a hollow airfoil, being formed with the use of a friction stir welding system.

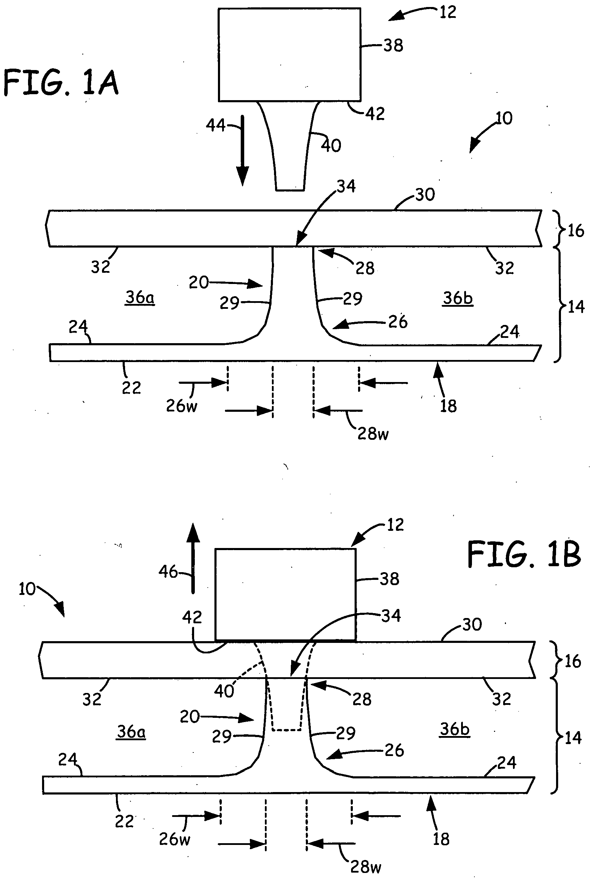

FIGS. 1A-1D are side views of a hollow structure 10 being formed with the use of friction stir welding (FSW) system 12. As shown in FIG. 1A, hollow structure 10 is a central portion of a hollow airfoil, and includes base portion 14 and cover portion 16. Base portion 14 is a pressure side of the hollow airfoil, and includes plate 18 and rib 20. Plate 18 includes outer surface 22 and interior surface 24, which are opposing major surfaces of plate 18. Rib 20 is a tapered support member that includes bottom end 26 and top end 28 which are offset along a height of rib 20. Rib 20 also has a length (not shown) that extends along plate 18 in a direction that is perpendicular to the height and width of rib 20 (i.e., toward or away from the view shown in FIG. 1A).

Bottom end 26 of rib 20 extends perpendicularly from interior surface 24 with sloped sides 29 that cause the width of rib 20 to decrease when moving from bottom end 26 to top end 28. Thus, the width of rib 20 at bottom end 26 (shown as width 26w) is greater than the width of rib 20 at top end 28 (shown as width 28w). As discussed below, sloped sides 29 of rib 20 transfer portions of the stress loads applied to rib 20 to plate 18 during a FSW operation, thereby reducing the risk of buckling or fracturing rib 20. As further shown, sloped sides 29 at bottom end 26 of rib 28 extends from interior surface 24 with fillet curvatures.

Cover portion 16 is a suction side of the hollow airfoil, and includes outer surface 30 and interior surface 32, which are opposing major surfaces of cover portion 16. In an alternative embodiment, base portion 14 and cover portion 16 are reversed such that base portion 14 is the suction side of the hollow airfoil and cover portion 16 is the pressure side. Interior surface 32 is disposed on top end 28 of rib 20, which defines intersection 34 between base portion 14 and cover portion 16. Positioning base portion 14 and cover portion 16 in this manner forms hollow regions 36a and 36b on opposing lateral sides of rib 20. Accordingly, the volumes of hollow regions 36a and 36b are determined in part by the width of rib 20.

FSW system 12 includes tool 38 and pin 40, where tool 38 includes shoulder surface 42. Pin 40 extends from shoulder surface 42 and is designed to match the width of rib 20, as discussed further below. FSW system 12 also includes a controller (not shown) that directs tool 38 and pin 40 to rotate for performing an FSW operation. Examples of suitable commercially available systems for FSW system 12 includes robotic and automatic systems from Friction Stir Link, Inc., Menomonee Falls, WI. Suitable tool diameters for tool 38 range from about 10 millimeters (mm) to about 12 mm. Suitable diameters for pin 40 range from about 2 mm to about 6 mm.

During a welding operation, base portion 14 and cover portion 16 are positioned and retained in the arrangement shown in FIG. 1A, where outer surface 22 of base portion 14 rests on a working surface (not shown). Tool 38 and pin 40 of FSW system 12 are then positioned above cover portion 16, and are aligned with rib 20. The controller of FSW system 12 then directs tool 38 and pin 40 to rotate and move down toward outer surface 30 of cover portion 16 (in a direction of arrow 44). This causes pin 40 to dig into cover portion 16 from outer surface 30, and to continue to dig through cover portion 16, through interior surface 32, and into top portion 28 of rib 20. Pin 40 continues to dig into rib 30 until shoulder surface 42 of tool 38 reaches outer surface 30 of cover portion 16.

As shown in FIG. 1B, pin 40 (shown with hidden lines) is fully inserted within cover portion 16 and rib 20. Pin 40 is desirably designed such that, when fully inserted, the diameter of pin 40 located at intersection 34 is slightly less than width 28w of top end 28. This allows pin 40 to maximize the weld diameter at intersection 18, while also reducing the risk of pin 40 becoming depleted of alloy to effect the weld and introduce porosity into the weld.

After pin 40 is fully inserted into cover portion 16 and rib 20, the controller of FSW system 12 directs tool 38 and pin 40 to move along the length of rib 20 (i.e., toward or away from the view shown in FIG. 1B). As tool 38 and pin 40 move along the length of rib 20, the rotation of tool 38 and pin 40 frictionally heat the alloys of cover portion 16 and rib 20 at intersection 34. The heated alloys enter a plastic-like state, and are stirred by the rotational motion of tool 38 and pin 40, thereby creating welded joint (not shown in FIG. 1B) extending along the length of rib 20 at intersection 34.

During the insertion and welding operation, tool 38 and pin 40 apply substantial stress loads on rib 20. However, sloped sides 29 of rib 20 transfers portion of the applied stress loads from rib 20 to plate 18. This allows rib 20 to be designed with smaller average widths, without buckling or fracturing during the FSW operation, thereby increasing the volumes of hollow regions 36a and 36b and reducing the weight of hollow structure 10. When the FSW operation is completed, tool 38 and pin 40 are then removed from rib 20 and cover portion 16 (in a direction of arrow 46), thereby providing a welded joint (not shown in FIG. 1B) between base portion 14 and cover portion 16.

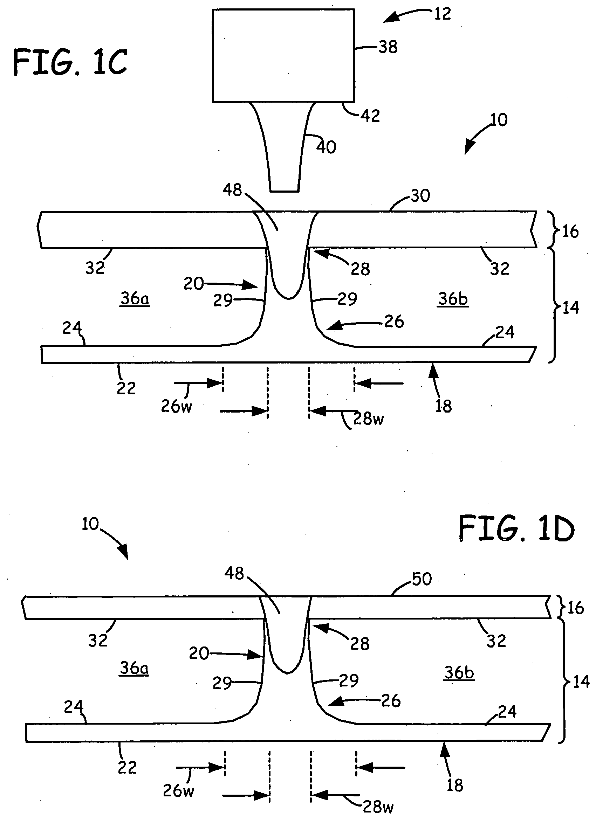

FIG. 1C shows hollow structure 10 after FSW system 12 is removed, where cover portion 16 and rib 20 are secured together with welded joint 48. Welded joint 48 extends along the length of rib 20, and provides a secure bond between cover portion 16 and rib 20. For airfoils that include multiple tapered ribs (e.g., rib 20) disposed between cover portion 16 and plate 18, the above-discussed steps are then repeated for each rib extension to form welded joints at each tapered rib. After all of the FSW operations are completed, outer surface 30 of cover portion 16 is ground and finished to remove excess alloy formations at the welded joints (e.g., welded joint 48).

As shown in FIG. 1D, after the grounding and finishing, outer surface 30 of cover portion 16 is replaced with finished outer surface 50. The resulting airfoil 10 is then ready for subsequent processing steps and assembly in a turbine engine. The use of sloped sides 29 for rib 20 allows hollow structure 10 to have increased hollow regions (e.g., hollow regions 36a and 36b), while also reducing the risk of buckling or fracturing rib 20 during the FSW operation.

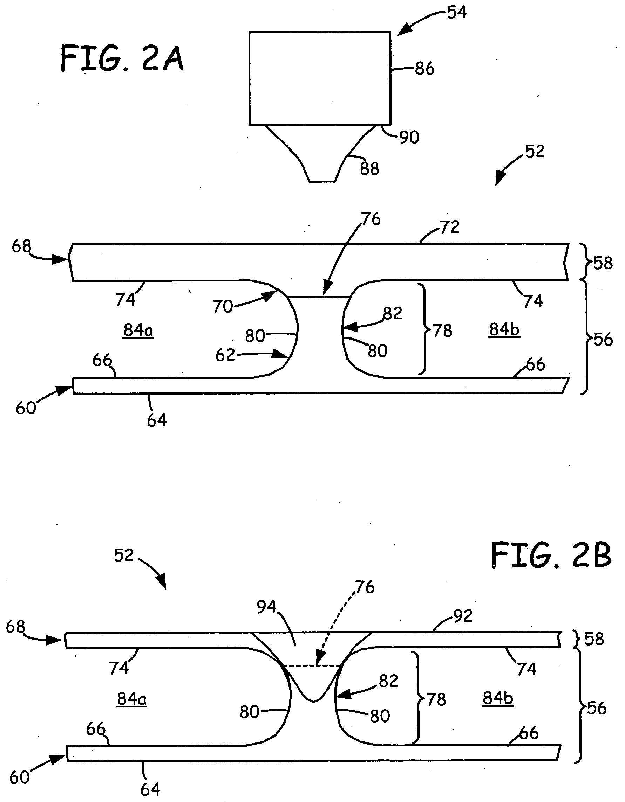

FIGS. 2A and 2B are side views of hollow structure 52 being formed with the use of FSW system 54. As shown in FIG. 2A, hollow structure 52 is similar to hollow structure 10 except that hollow structure 52 includes a tapered rib having sloped sides extending from each end. Hollow structure 52 includes base portion 56 and cover portion 58, where base portion 56 includes plate 60 and rib segment 62. Plate 60 includes outer surface 64 and interior surface 66, which are opposing major surfaces of plate 60. Rib segment 62 is a tapered rib segment that extends perpendicularly from interior surface 66.

Cover portion 58 includes plate 68 and rib segment 70, where plate 68 includes outer surface 72 and interior surface 74. Rib segment 70 extends perpendicularly from interior surface 74, and is disposed adjacent to rib segment 62, thereby forming intersection 76 between base portion 56 and cover portion 58. Rib segments 62 and 70 also define rib 78, which functions in the same manner as rib 20 (shown in FIG. 1A) for offsetting and supporting plates 60 and 70.

Rib 78 is a tapered rib having sloped sides 80 that decrease the width of rib 78 toward a central location between base portion 56 and cover portion 58 (referred to as central location 82). Sloped sides 80 of rib 78 function in the same manner as tapered slopes 29 (shown in FIG. 1A) for transferring applied loads from rib segment 62 to plate 60 during FSW operations. Sloped sides 80 of rib 78 also reduce the stress loads applied to rib 78 at intersection 76, thereby reducing the risk of forming fatigue cracks in rib 78 under the high stress loads applied by FSW system 54.

Positioning base portion 56 and cover portion 58 in the manner shown in FIG. 2A forms hollow regions 84a and 84b on opposing lateral sides of rib 78. The volumes of hollow regions 84a and 84b are determined in part on the widths of rib 78, which are accordingly based in part on the dimensions of sloped sides 80.

FSW system 54 is similar to FSW system 12 (shown in FIG. 1A) and includes tool 86 and pin 88, where tool 86 includes shoulder surface 90. Pin 88 extends from shoulder surface 90 in the same manner as pin 20 (shown in FIG. 1A) and is designed to match the width of rib 78. During an FSW operation, tool 86 and pin 88 apply substantial stress loads on rib 78. Sloped sides 80 transfer portions of the applied stress loads from rib 78 to plate 60, thereby allowing rib 78 to be designed with smaller widths without buckling or fracturing during the FSW operation. Additionally, sloped sides 80 also reduce the stress loads applied to rib 78 at intersection 76, which reduces the risk of forming fatigue cracks in rib 78 during the FSW operation.

FIG. 2B shows hollow structure 52 after the FSW operation and finishing steps are completed, where plate 68 now includes finished outer surface 92. After FSW system 54 is removed from hollow structure 52, rib 78 is secured with welded joint 94. Welded joint 94 extends along the length of rib 78, and provides a secure bond between base portion 56 and cover portion 58 (the pre-weld location of intersection 76 is shown with a hidden line). The use of sloped sides 80 of rib 78 allows hollow structure 52 to have increased-volume hollow regions (i.e., hollow regions 84a and 84b), while also reducing the risk of buckling, fracturing, or forming fatigue cracks in rib 78 during the FSW operations.

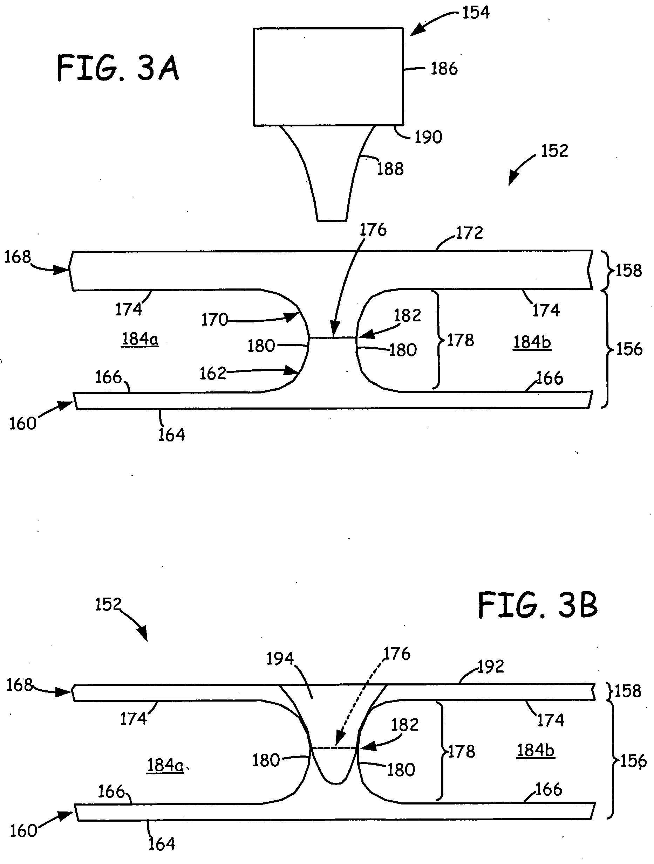

FIGS. 3A and 3B are side views of hollow structure 152 being formed with the use of FSW system 154. Hollow structure 152 and FSW system 154 have configurations similar to hollow structure 52 and FSW system 54, and the respective reference labels are increased by 100.

As shown in FIG. 3A, rib segment 162 of base portion 156 is shorter than rib segment 62 (shown in FIG. 2A), and rib segment 170 of cover portion 158 is longer than rib segment 70 (shown in FIG. 2A). As a result, intersection 176 between rib segments 162 and 170 is centrally located between plates 160 and 172 (i.e., located at central location 182). This arrangement places the neutral axis of rib segments 162 and 170 at a central location, which reduces bending stresses applied to rib segments 162 and 170 during an FSW operation. This accordingly increases the strength of rib 178 during an FSW operation and during use.

As further shown, pin 188 of FSW system 154 is designed to match the width of rib 178, and to reach a depth within rib 178 that adequately welds rib segments 162 and 170 at intersection 176. During an FSW operation, sloped sides 180 transfer portions of the applied stress loads from rib 178 to plates 160 and 168 in the same manner as discussed above for sloped sides 80 (shown in FIG. 2A). This reduces the risk of buckling or fracturing, or forming fatigue cracks, under the high stress loads that are applied by FSW system 154. Additionally, the central location of intersection 176 further reduces the risk of damaging rib 178 during the FSW operation by reducing the applied bending stresses.

FIG. 3B shows hollow structure 152 after the FSW operation and finishing steps are completed. After FSW system 154 is removed from hollow structure 152, rib 178 is secured with welded joint 194 (the pre-weld location of intersection 176 is shown with a hidden line). Welded joint 194 extends along the length of rib 178, and provides a secure bond between base portion 156 and cover portion 158.

As shown in FIGS. 1A-3B, the locations of the intersections between the base portions and the cover portions may vary along the height of the rib extensions. Accordingly, the intersections between the base portions and the cover portions (e.g., intersections 34, 76, and 176) may range from being substantially even with the interior surfaces of the cover portions (e.g., intersection 34, shown in FIG. 1A) to being centrally located between the base portions and the cover portions (e.g., intersection 176, shown in FIG. 3A). This allows a variety of structural designs to be used for welding hollow airfoil structures.

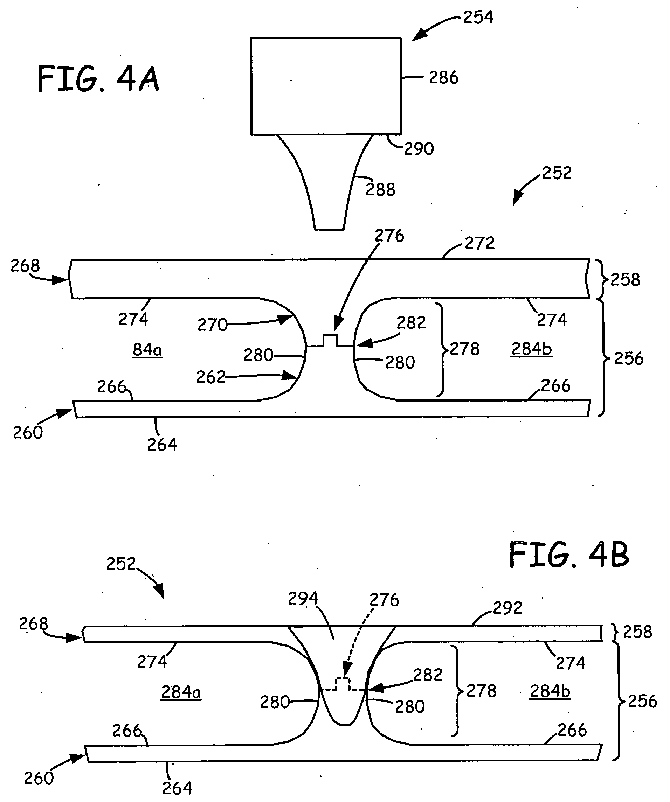

FIGS. 4A and 4B are side views of hollow structure 252 being formed with the use of FSW system 254, according to the invention. Hollow structure 252 and FSW system 254 have configurations similar hollow structure 52 and FSW system 54 (shown in FIG. 2A), and the respective reference labels are increased by 200.

As shown in FIG. 4A, intersection 276 of rib segments 262 and 270 is centrally located between plates 260 and 268 in the same manner as that for intersection 176 (shown in FIG. 3A). However, rib segments 262 and 268 also define a notch shape at intersection 276, which provides a mechanical locking mechanism that reduces the risk of lateral movement between rib segments 262 and 270. This increases lateral stability of hollow structure 252 during the FSW operation, which correspondingly increases the accuracy of the weld. Additionally, during an FSW operation, sloped sides 280 transfer portions of the applied stress loads from rib 278 to plates 260 and 268 in the same manner as discussed above for sloped sides 80 (shown in FIG. 2A).

FIG. 4B shows hollow structure 252 after the FSW operation and finishing steps are completed. After FSW system 254 is removed from hollow structure 252, rib 278 is secured with welded joint 294 (the pre-weld location of intersection 276 is shown with a hidden line). Welded joint 294 extends along the length of rib 278, and provides a secure bond between base portion 256 and cover portion 258. While rib segments 262 and 270 are shown in FIGS. 4A and 4B as defining a notch shape at intersection 276, any shape that reduces the risk of lateral movement between rib segments 262 and 270 can be used in a similar manner. Examples of suitable shapes include saw-tooth shapes, multiple notch shapes, and combinations thereof.

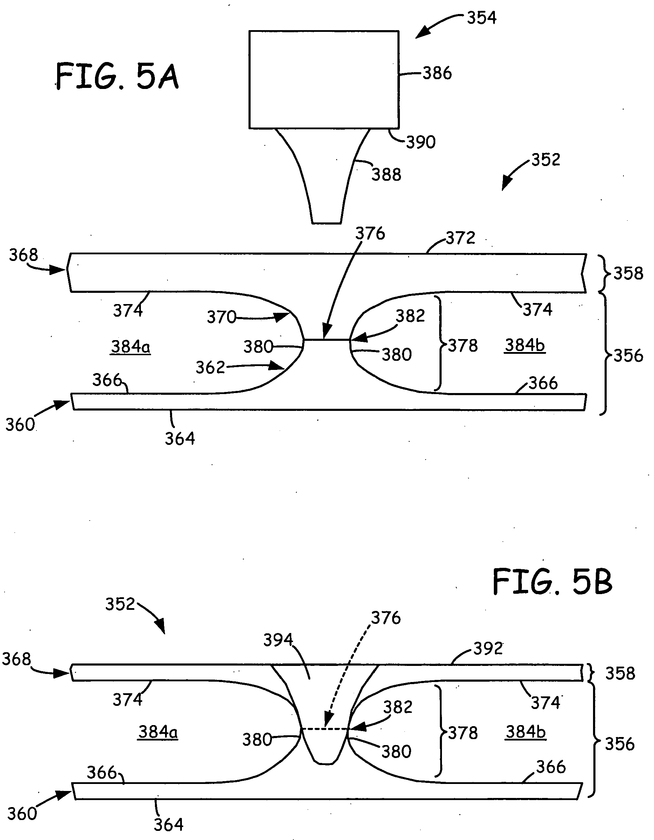

FIGS. 5A and 5B are side views of hollow structure 352 being formed with the use of FSW system 354. Hollow structure 352 and FSW system 354 have configurations similar hollow structure 52 and FSW system 54, and the respective reference labels are increased by 300.

As shown in FIG. 5A, sloped sides 380 of rib 378 each have gradual slopes compared to sloped sides 80 of hollow structure 52 (shown in FIG. 2A). Sloped sides 380 define elliptical shapes for hollow regions 384a and 384b, which provide an additional means for increasing lateral stability of hollow structure 352 during an FSW operation and during use. Additionally, during an FSW operation, sloped sides 380 transfer portions of the applied stress loads from rib 378 to plates 360 and 368. This reduces the risk of buckling or fracturing under the high stress loads that are applied by FSW system 354.

FIG. 5B shows hollow structure 352 after the FSW operation and finishing steps are completed. After FSW system 354 is removed from hollow structure 352, rib 378 is secured with welded joint 394 (the pre-weld location of intersection 376 is shown with a hidden line). Welded joint 394 extends along the length of rib 378, and provides a secure bond between base portion 356 and cover portion 358.

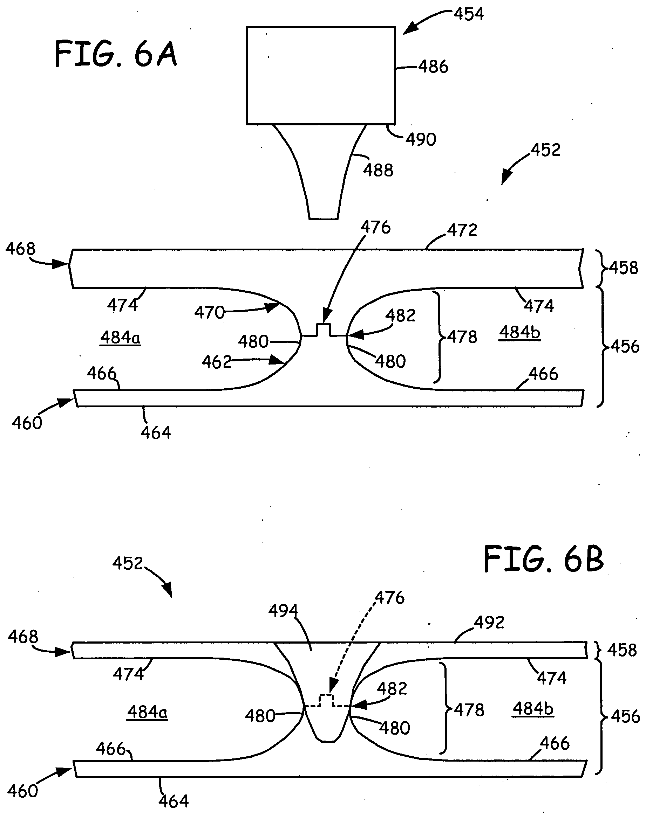

FIGS. 6A and 6B are side views of hollow structure 452 being formed with the use of FSW system 454, which illustrate another embodiment of the invention. Hollow structure 452 and FSW system 454 have configurations similar hollow structure 52 and FSW system 54 (shown in FIG. 2A), and the respective reference labels are increased by 400.

Hollow structure 452 includes a combination of the features shown above in FIGS. 3A-5B. Intersection 476 of rib segments 462 and 470 is centrally located between plates 460 and 468 in the same manner as that for intersection 176 (shown in FIG. 3A). Additionally, rib segments 462 and 470 also define a notch shape at intersection 476, which increases lateral stability of hollow structure 452 during the FSW operation, as discussed above for intersection 276 (shown in FIG. 4A). Furthermore, sloped sides 480 have gradual slopes compared to sloped sides 380 of hollow structure 352 (shown in FIG. 5A). As such, sloped sides 380 define elliptical shapes for hollow regions 484a and 484b, which provide an additional means for increasing lateral stability of hollow structure 452 during an FSW operation and during use.

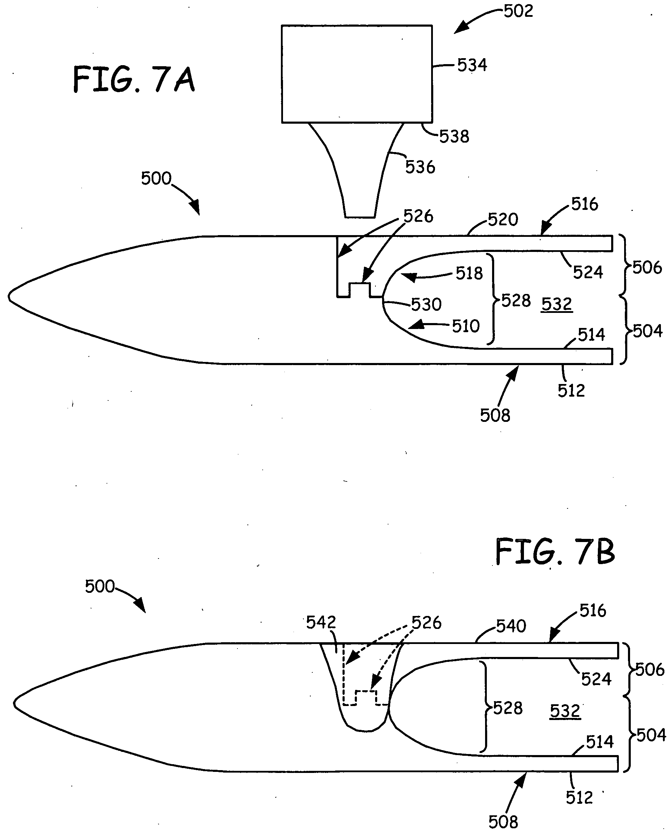

FIGS 7A and 7B are side views of hollow structure 500 being formed with the use of FSW system 502, which illustrate another alternative embodiment of the invention. As shown in FIG. 7A, hollow structure 500 is a corner edge of a hollow airfoil (e.g., an airfoil trailing edge), and includes base portion 504 and cover portion 506, where base portion 504 includes plate 508 and corner segment 510. Plate 508 includes outer surface 512 and interior surface 514, which are opposing major surfaces of plate 508. Corner segment 510 is a tapered corner segment that extends perpendicularly from interior surface 514, and defines the corner edge of hollow structure 500.

Cover portion 506 includes plate 516 and corner segment 518, where plate 516 includes outer surface 520 and interior surface 522. Corner segment 518 extends perpendicularly from interior surface 524, and is disposed adjacent to corner segment 510, thereby forming intersection 526 between base portion 504 and cover portion 506. Corner segments 510 and 520 also define corner wall 528, which functions in a similar manner as rib 478 (shown in FIG. 6A) for offsetting and supporting plates 508 and 516 at the corner edge of hollow structure 500. Corner wall 528 is a tapered corner wall having sloped side 530, which decreases the width of corner wall 528 toward a central location between base portion 504 and cover portion 506.

Positioning base portion 504 and cover portion 506 in the manner shown in FIG. 7A forms hollow region 532 adjacent corer wall 528. The volume of hollow region 532 is determined in part on the dimensions of corner wall 528, which is accordingly based in part on the dimensions of sloped side 530. As shown, sloped side 530 defines an elliptical shape for hollow region 532, which provides an additional means for increasing lateral stability of hollow structure 500 during an FSW operation and during use.

FSW system 502 is similar to FSW system 12 (shown in FIG. 1A) and includes tool 534 and pin 536, where tool 534 includes shoulder surface 538. Pin 536 extends from shoulder surface 538 in the same manner as pin 20 (shown in FIG. 1A) and is designed to match the dimensions of intersection 526 and corner wall 528. Suitable tool diameters for tool 534 range from about 10 mm to about 12 mm. Suitable diameters for pin 536 range from about 4 mm to about 6 mm.

During an FSW operation, tool 534 and pin 536 apply substantial stress loads on corner wall 528. Sloped side 530 of corner wall 528 transfers a portion of the applied stress loads from corner wall 528 to plate 508, thereby reducing the risk of buckling or fracturing corner wall 528 during the FSW operation. Additionally, sloped side 530 reduces the stress loads applied to corner wall 528 at intersection 526, which reduces the risk of forming fatigue cracks in corner wall 528 during the FSW operation.

FIG. 7B shows hollow structure 500 after the FSW operation and finishing steps are completed, where plate 516 now includes finished outer surface 540. After FSW system 502 is removed from hollow structure 500, corner wall 528 is secured with welded joint 542. Welded joint 542 extends along the length of corner wall 528, and provides a secure bond between base portion 504 and cover portion 506 (the pre-weld location of intersection 526 is shown with a hidden line). The use of sloped sides 530 allows hollow structure 500 to have increased-volume hollow regions (i.e., hollow region 532), while also reducing the risk of buckling, fracturing, or forming fatigue cracks in corner wall 528 during the FSW operations.

While the above-discussed hollow structures (e.g., hollow structures 10, 52, 152, 252, 352, 452, and 500) are discussed as being sections of a hollow airfoil, the present invention is suitable for use with a variety of different hollow structures that include multiple metal parts welded together with FSW operations. Furthermore, a variety of different tapered support members (e.g., tapered ribs and tapered corner walls) may be used between the metal parts to provide intersections for welded joints.

The base portions and cover portions of the hollow structures of the present invention (e.g., hollow structures 10, 52, 152, 252, 352, 452, and 500) may be derived from a variety of materials, such as titanium and aluminum-based alloys. The base portions and cover portions may be formed from the alloys in a variety of manners, such as powder metallurgy processes, extrusion processes, die casting, strip casting, and combinations thereof. Additional suitable methods for forming metal parts 14 and 16 are disclosed in U.S. Patent No. 6,974,510.

The base portions and cover portions are each derived from one or more aluminum - rare earth - transition metal (Al-RE-TM) alloys, which provide high strengths and ductilities for the hollow structures. Al-RE-TM alloys derive their strength properties from nanometer-sized grain structures and nanometer sized intermetallic phases. Accordingly, such alloys are not easily fusion welded due to the fact that the refined microstructures that give these alloys their strengths are destroyed within the melt pool, thereby leaving coarse microstructures that are significantly lower in strength as well as ductility. The use of a FSW operation for welding metal parts containing glassy aluminum-based alloys is disclosed in US patent application No. 11/818,701 entitled "Friction Stir Welded Structures Derived from Al-RE-TM Alloys".

Suitable Al-RE-TM alloys for forming the base portions and the cover portions of the hollow structures of the present invention include glassy, partially-devitrified, and fully devitrified alloys that at least include aluminum (Al), a rare earth metal (RE), and a transition metal (TM). Suitable concentrations of the aluminum in the alloy include the balance between the entire alloy weight and the sum of the concentrations of the other metals in the alloy (e.g., the sum of the concentrations of the rare earth metal and the transition metal). Suitable concentrations of the rare earth metal in the alloy range from about 3% by weight to about 20% by weight, with particularly suitable concentrations ranging from about 7% by weight to about 13% by weight, based on the entire weight of the alloy. Suitable concentrations of the transition metal in the alloy range from about 0.1% by weight to about 20% by weight, with particularly suitable concentrations ranging from about 1% by weight to about 15% by weight, based on the entire weight of the alloy. Additional examples of suitable glassy aluminum-based alloys include those disclosed in U.S. Patent No. 6,974,510.

In one embodiment, the glassy aluminum-based alloy also includes one or more additional metals, such as magnesium, scandium, titanium, zirconium, iron, cobalt, gadolinium, and combinations thereof. Suitable concentrations of the additional metals in the alloy range from about 0.1% by weight to about 10% by weight, with particularly suitable concentrations ranging from about 1% by weight to about 5% by weight, based on the entire weight of the alloy. An example of a particularly suitable glassy aluminum-based alloy for use in forming the base portions and the cover portions include an alloy of aluminum-yttrium (Y)-nickel (Ni)-cobalt (Co) (referred to herein as an "Al-Y-Ni-Co" alloy), where yttrium is referred to as a rare earth element.

## Claims

1. A method of forming a hollow structure (252; 452; 500), the method comprising:
positioning a first metal part (258; 458; 506) adjacent to a tapered support member (278; 478; 528) of a second metal part (256; 456; 504) to form an intersection (276; 476; 526), wherein the tapered support member extends from a plate (260; 460; 508) of the second metal part and is configured to transfer at least a portion of an applied stress load from the tapered support member to the plate;
friction stir welding the first metal part and the tapered support member to form a welded joint at the intersection, wherein the friction stir welding applies a stress load to the tapered support member, **characterised in that** the tapered support member at least partially defines a mechanical locking mechanism at the intersection, and **in that** the first metal part and the second metal part are each derived from at least one Al-RE-TM alloy.

2. The method of claim 1, wherein the intersection (276; 476; 526) is centrally-located between the first metal part (258; 458; 506) and the second metal part (256; 456; 504).

3. The method of claim 1 or 2, wherein the tapered support member (278; 478) comprises a pair of sloped sides.

4. The method of claim 1, 2 or 3, wherein the at least one Al-RE-TM alloy comprises an Al-Y-Ni-Co alloy.

5. The method of any one of claims 1 to 4, wherein the first metal part (258; 458; 506) has a first plate (268; 468; 516) and a first tapered support member segment (270; 470; 518) extending from a major surface of the first plate;
the second metal part (256; 456; 504) has said second plate (260; 460 500), said support member of said second metal part being a second tapered support member segment (262; 462; 510) and extending from a major surface of the second plate;
the method further comprising positioning the first tapered support member segment adjacent to the second tapered support member segment to form an intersection (276; 476; 526);
friction stir welding the first tapered support member segment and second tapered support member segment to form a welded joint at the intersection.

6. The method of claim 5, wherein the first support member segment (270; 470; 518) and the second support member segment (262; 462; 510) define a mechanical locking mechanism at the intersection.

## Patentansprüche

1. Verfahren zum Bilden einer Hohlstruktur (252; 452; 500), wobei das Verfahren Folgendes umfasst:
Anordnen eines ersten Metallteils (258; 458; 506) benachbart zu einem verjüngten Stützelement (278; 478; 528) eines zweiten Metallteils (256; 456; 504), um einen Schnittpunkt (276; 476; 526) zu bilden, wobei sich das verjüngte Stützelement von einer Platte (260; 460; 508) des zweiten Metallteils erstreckt und dazu konfiguriert ist, wenigstens einen Teil einer ausgeübten Spannungsbelastung von dem verjüngten Stützelement auf die Platte zu übertragen;
Rührreibschweißen des ersten Metallteils und des verjüngten Stützelements, um eine Schweißnaht an dem Schnittpunkt zu bilden, wobei das Rührreibschweißen eine Spannungsbelastung auf das verjüngte Stützelement ausübt, **dadurch gekennzeichnet, dass** das verjüngte Stützelement wenigstens teilweise einen mechanischen Arretierungsmechanismus an dem Schnittpunkt definiert und dass das erste Metallteil und das zweite Metallteil jeweils aus wenigstens einer Al-RE-TM-Legierung gewonnen werden.

2. Verfahren nach Anspruch 1, wobei der Schnittpunkt (276; 476; 526) zentral zwischen dem ersten Metallteil (258; 458; 506) und dem zweiten Metallteil (256; 456; 504) angeordnet wird.

3. Verfahren nach Anspruch 1 oder 2, wobei das verjüngte Stützelement (278; 478) ein Paar geneigter Seiten umfasst.

4. Verfahren nach Anspruch 1, 2 oder 3, wobei die wenigstens eine Al-RE-TM-Legierung eine Al-Y-Ni-Co-Legierung umfasst.

5. Verfahren nach einem der Ansprüche 1 bis 4, wobei das erste Metallteil (258; 458; 506) eine erste Platte (268; 468; 516) und ein erstes verjüngtes Stützelementsegment (270; 470; 518) aufweist, das sich von einer Hauptfläche der ersten Platte erstreckt;
das zweite Metallteil (256; 456; 504) eine zweite Platte (260; 460; 500) aufweist, wobei das Stützelement des zweiten Metallteils ein zweites verjüngtes Stützelementsegment (262; 462; 510) ist, das sich von einer Hauptfläche der zweiten Platte erstreckt;
wobei das Verfahren ferner Folgendes umfasst: Anordnen des ersten verjüngten Stützelementsegments benachbart zu dem zweiten verjüngten Stützelementsegment, um einen Schnittpunkt (276; 476; 526) zu bilden;
Rührreibschweißen des ersten verjüngten Stützelementsegments und des zweiten verjüngten Stützelementsegments, um eine Schweißnaht an dem Schnittpunkt zu bilden.

6. Verfahren nach Anspruch 5, wobei das erste Stützelementsegment (270; 470; 518) und das zweite Stützelementsegment (262; 462; 510) einen mechanischen Arretierungsmechanismus an dem Schnittpunkt definieren.

## Revendications

1. Procédé de formation d'une structure creuse (252 ; 452 ; 500), le procédé comprenant :
le positionnement d'une première partie métallique (258 ; 458 ; 506) adjacente à un élément de support pointu (278 ; 478 ; 528) d'une seconde partie métallique (256 ; 456 ; 504) pour former une intersection (276 ; 476 ; 526), dans lequel l'élément de support pointu s'étend depuis une plaque (260 ; 460 ; 508) de la seconde partie métallique et est configuré pour transférer au moins une partie d'une charge de contrainte appliquée depuis l'élément de support pointu à la plaque ;
le soudage par friction malaxage de la première partie métallique et de l'élément de support pointu pour former un joint soudé sur l'intersection, dans lequel le soudage par friction malaxage applique une force de contrainte à l'élément de support pointu, **caractérisé en ce que** l'élément de support pointu définit au moins en partie un mécanisme de verrouillage mécanique sur l'intersection, et **en ce que** la première partie métallique et la seconde partie métallique sont chacune dérivées d'au moins un alliage de Al-RE-TM.

2. Procédé selon la revendication 1, dans lequel l'intersection (276 ; 476 ; 526) est située centralement entre la première partie métallique (258 ; 458 ; 506) et la seconde partie métallique (265 ; 456 ; 504).

3. Procédé selon la revendication 1 ou 2, dans lequel l'élément de support pointu (278 ; 478) comprend une paire de côtés inclinés.

4. Procédé selon la revendication 1, 2 ou 3, dans lequel l'au moins un alliage de Al-RE-TM comprend un alliage de Al-Y-Ni-Co.

5. Procédé selon l'une quelconque des revendications 1 à 4, dans lequel la première partie métallique (258 ; 458 ; 506) présente une première plaque (268 ; 468 ; 516) et un premier segment d'élément de support pointu (270 ; 470 ; 518) s'étendant depuis une surface majeure de la première plaque ;
la seconde partie métallique (256 ; 456 ; 504) présente ladite seconde plaque (260 ; 460 ; 500), ledit élément de support de ladite seconde partie métallique étant un second segment d'élément de support pointu (262 ; 462 ; 510) et s'étendant depuis une surface majeure de la seconde plaque ;
le procédé comprenant en outre le positionnement du premier segment d'élément de support pointu adjacent au second segment d'élément de support pointu pour former une intersection (276 ; 476 ; 526) ;
le soudage par friction malaxage du premier segment d'élément de support pointu et du second segment d'élément de support pointu pour former un joint soudé sur l'intersection.

6. Procédé selon la revendication 5, dans lequel le premier segment d'élément de support (270 ; 470 ; 518) et le second segment d'élément de support (262 ; 462 ; 510) définissent un mécanisme de verrouillage mécanique sur l'intersection.
